# EUROPEAN PATENT APPLICATION

(11) **EP 1 775 611 A1**
(43) Date of publication of application: **18.04.2007**
(21) Application number: 05026872.1
(22) Date of filing: 08.12.2005
(51) Int. Cl.: G02B 6/42, G02F 1/13357, F21V 8/00, G02B 6/00

(54) **Back light unit with means for improving the light source coupling into the incident surface of a light guiding plate**

(30) Priority: 14.10.2005 KR 2005096842; 14.10.2005 KR 2005096844
(71) Applicant: LG Electronics Inc., Yongdungpo-Gu Seoul 150-010 (KR)
(72) Inventor: Lee, Seoung Ho, Shinan Apt 110-1403, Kimpo-si Gyeonggi-do 415-733 (KR); Lee, Sang Gon, LG Women's Dormitory 523, Cheongju-si Chungcheongbuk-do 361-714 (KR)
(74) Representative: von Hellfeld, Axel

(57) **Abstract**

The present invention relates to a back light unit. Particularly, the present invention relates to a back light unit which can increase the efficiency of light condensation.

A back light unit according to the present invention comprises a light source unit (110); a light guiding plate (120) for changing and emitting the light incident from the light source unit into surface light, and having a means (202-802) for preventing light loss on an incident surface facing the light source unit; and a prism sheet (144) located on the upper surface of the light guiding plate, each prism facing the light guiding plate. Preferably, the means for preventing light loss is protuberantly formed on the incident surface toward the light source unit, or in the form of prism (302) on the incident surface. And, preferably, the means for preventing light loss is a fresnel lens (402) attached onto the incident surface. Preferably, the means for preventing light loss has an oblique surface which is curved (602,802). The back light unit further includes a reflective sheet (130) located on the lower surface of the light guiding plate to reflect the light emitted from the light guiding plate.

## Description

### BACKGROUND OF THE INVENTION

### Field of the Invention

The present invention relates to a back light unit. Particularly, the present invention relates to a back light unit which can increase the efficiency of light condensation.

### Description of the Related Art

Liquid Crystal Display device (hereinafter, "LCD device") is an electrical device which changes electrical data generated from many apparatuses into visual data, and transfers them by using variation of crystal transmissivity according to applied voltage.

LCD device is a device for displaying information, but does not have a light source in itself. Thus, LCD device needs an extra device to uniformly brighten the entire screen of LCD device by a light source installed on the rear surface of LCD device. As such extra device, Back Light Unit (hereinafter, "BLU") providing a light to the screen of LCD device is used.

BLU is classified into direct-light type and edge-light type according to the installed position of Cold Cathode Fluorescent Lamp (hereinafter, "CCFL"). In the direct-light type of BLU, a lamp is disposed under liquid crystal panel, and in the edge-light type BLU, a lamp is disposed on a side of light guiding plate.

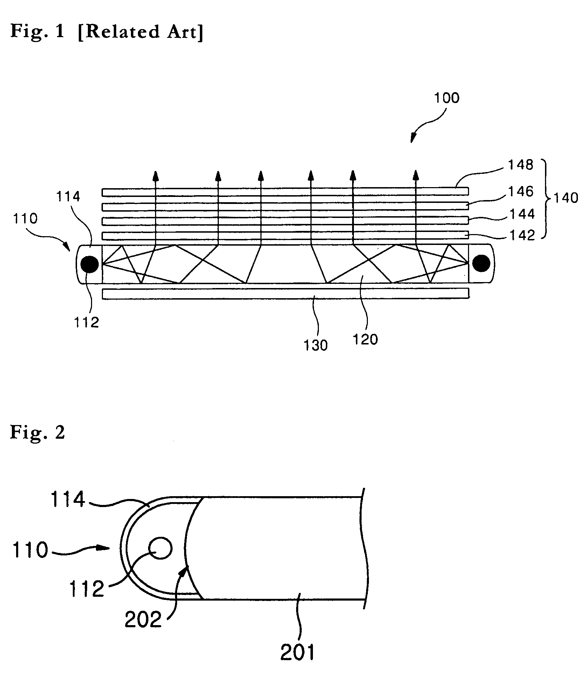

Fig.1 is a cross-sectional view schematically showing BLU of LCD device.

Fig.1 shows edge-light type of BLU **100.** The edge-light type of BLU **100** comprises a light source unit **110,** a light guiding plate **120,** a reflective sheet **130,** and an optical film **140.**

The light source unit **110** comprises at least one CCFL **112** generating a light with a predetermined wavelength, and a light source reflector **114.** The light generated from CCFL **112** is reflected by the light source reflector **114** made up of reflective material, and the reflective sheet **130.** Then, as shown in Fig. 1, the reflected light is diffused uniformly through the entire light guiding plate **120.**

The optical film **140** comprises a diffusion sheet **142,** a prism sheet **144,** a protection sheet **146,** and a reflective polarization film **148.** The reflective polarization film **148** is optionally used.

The function of each element in the optical film **140** is explained as follows.

The light uniformly diffused in the light guiding plate **120** passes through the diffusion sheet **142.** The diffusion sheet **142** diffuses or condenses the light having passed through the light guiding plate **120** so that the brightness becomes uniform and the viewing angle becomes wider.

However, the brightness of the light having passed through the diffusion sheet **142** is remarkably decreased. To solve this problem, a prism sheet **144** is used. The prism sheet **144** refracts the light having passed through the diffusion sheet **142,** and converges the light incident in low angle to the direction substantially perpendicular to the prism sheet **144** so that the brightness is increased within the range of effective viewing angle.

The protection sheet **146** is disposed on the prism sheet **144.** Thus, the protection sheet **146** prevents the prism sheet **144** from being damaged, and makes the narrowed viewing angle wider.

LCD device (not shown) disposed on the optical film **140** has the property to pass through only a part of light exiting from the optical film **140.** For example, longitudinal wave (P-wave) is passed through, and transverse wave (S-wave) is absorbed. Therefore, the reflective polarization film **148** is disposed to use the absorbed transverse wave.

The reflective polarization film **148** reflects the transverse wave (S-wave) in the light diffused by the protection sheet **146** to the direction of light guiding plate **120,** and provides the longitudinal wave (P-wave) to the LCD device (not shown).

The reflected transverse wave is reflected again by the light guiding plate **120** or the reflective sheet **130.** The reflected transverse wave is changed to the light including longitudinal wave and transverse wave by re-reflection. The changed light passes through the diffusion sheet **142,** the prism sheet **144** and the protection sheet **146,** and enters the reflective polarization film **148** again. Therefore, BLU **100** can increase the efficiency of light through the above-described process.

In Fig.1, the prisms of the prism sheet **144** are disposed toward the protection sheet **146.** However, in order to increase the light-using efficiency, the prisms of the prism sheet **144** may be disposed toward the diffusion sheet **142** (a reverse prism sheet).

In a plane light source unit with the reverse prism sheet, disclosed in US Patent No. 5,126,882 as well as BLU shown in Fig. 1, the incident surface of the light guiding plate **120** is perpendicular to the upper surface of the light guiding plate **120.**

In this BLU, the incident surface of the light guiding plate **120** is perpendicular to the upper surface of the light guiding plate **120,** and so when the light exiting from the light source **112** passes through the incident surface of the light guiding plate **120,** the brightness is significantly decreased.

### SUMMARY OF THE INVENTION

The object of the present invention is to provide a back light unit (BLU) which can prevent loss of the light exiting from the light source in order to solve the above-described problems resulted from the shape of the incident surface of the light guiding plate.

BLU according to the present invention comprises a light source unit; a light guiding plate for changing and emitting the light incident from the light source unit into surface light and having a means for preventing light loss on an incident surface facing the light source unit; and a prism sheet located on the upper surface of the light guiding plate, each prism facing the light guiding plate.

Preferably, the means for preventing light loss is protuberantly formed toward the light source unit, or in the form of prism, on the incident surface. And, preferably, the means for preventing light loss is a fresnel lens attached onto the incident surface.

Preferably, the means for preventing light loss has an oblique surface which is curved.

BLU further includes a reflective sheet located on the lower surface of the light guiding plate to reflect the light emitted from the light guiding plate.

BLU according to the present invention can increase the area of the incident surface by forming the incident surface of the light guiding plate inclined and/or curved. Also, BLU according to the present invention can increase the area of the incident surface by forming the incident surface of the light guiding plate prism-shaped, or attaching the fresnel lens onto the incident surface. Therefore, the efficiency of light condensation is increased, and the brightness of display apparatus is improved.

### BRIEF DESCRIPTION OF THE DRAWING

Fig.1 is a cross-sectional view showing the relation of a light source, a light guiding plate, an optical film, and a reflective sheet, disposed in an edge-light type back light unit.
Fig.2 is a cross-sectional view partially showing a light source and a light guiding plate, disposed in BLU according to a first embodiment of the present invention.
Fig.3 is a cross-sectional view partially showing a light source and a light guiding plate, disposed in BLU according to a second embodiment of the present invention.
Fig.4 is a cross-sectional view partially showing a light source and a light guiding plate, disposed in BLU according to a third embodiment of the present invention.
Fig.5 is a cross-sectional view partially showing a light source and a light guiding plate, disposed in BLU according to a fourth embodiment of the present invention.
Fig.6 is a cross-sectional view partially showing a light source and a light guiding plate, disposed in BLU according to a fifth embodiment of the present invention.
Fig.7 is a cross-sectional view partially showing a light source and a light guiding plate, disposed in BLU according to a sixth embodiment of the present invention.
Fig.8 is a cross-sectional view partially showing a light source and a light guiding plate, disposed in BLU according to a seventh embodiment of the present invention.

### DETAILED DESCRIPTION OF THE INVENTION

The present invention will be more clearly understood from the detailed description in conjunction with the following drawings.

In BLU according to the present invention, the function and constitution of the reflective sheet and the optical film are the same as those of BLU shown in Fig. 1. Therefore, the same explanation is omitted.

In BLU according to the present invention, the reverse prism sheet in which each prism is disposed toward the diffusion sheet may be used in order to increase the light-using efficiency. Also, each embodiment will be explained only by using the light source unit and the light guiding plate.

Fig.2 is a cross-sectional view partially showing the light source and the light guiding plate, disposed in BLU according to the first embodiment of the present invention.

As explained above, a light source unit **110** comprises a light source reflector **114** and a light source **112** installed on the light source reflector **114.**

An incident surface **202** of a light guiding plate **201,** facing the light source unit **110,** is a spherical surface protuberantly formed toward the light source **112,** or a non-spherical surface in which the radii of curvature are different. Therefore, the area of the incident surface **202** which the light generated from the light source **112** enters is increased, and thus the light loss is decreased while the light is condensed.

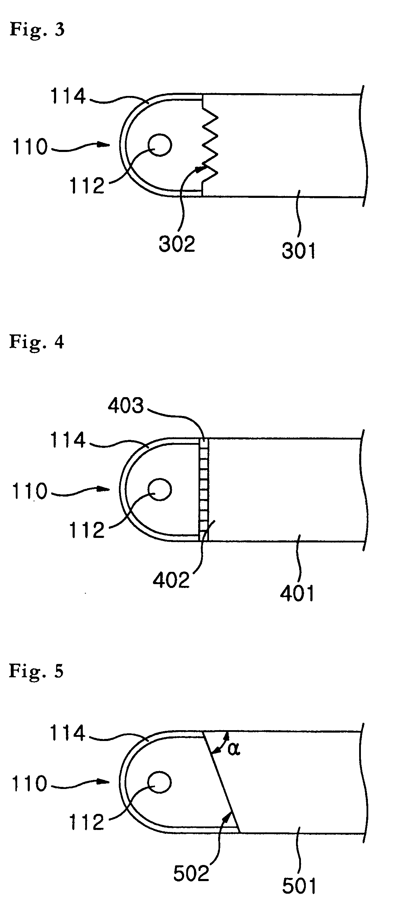

Fig.3 is a cross-sectional view partially showing the light source and the light guiding plate, disposed in BLU according to the second embodiment of the present invention. An incident surface **302** of a light guiding plate **301,** facing the light source unit **110,** has prisms.

Comparing with a flat incident surface, in the prism-shaped incident surface **302,** the area which the light enters is maximized, and thus the light loss can be decreased considerably. The angle of each prism forming the incident surface **302** is not limited, but the preferable angle is 90°.

Fig.4 is a cross-sectional view partially showing the light source and the light guiding plate, disposed in BLU according to the third embodiment of the present invention. An incident surface **402** of a light guiding plate **401,** facing the light source unit **110,** is provided with a fresnel lens **403.**

Usually, the fresnel lens **403** has two films. A flat outer film refracts a light, and an inner film of lens-shape or prism-shape transfers the light uniformly. Therefore, the light generated from the light source **112** emits in one direction by the fresnel lens **403.**

Fig.5 is a cross-sectional view partially showing the light source and the light guiding plate, disposed in BLU according to the fourth embodiment of the present invention.

Unlike the light guide plate of BLU shown in Fig. 1, an incident surface **502** of a light guiding plate **501** of BLU according to the fourth embodiment is not perpendicular to an upper surface of the light guiding plate **501,** but is inclined to the opposite side of a light source **112.**

In the light guiding plate **501** shown in Fig. 5, the angle (α) between the incident surface **502** and the upper surface is smaller than 90°. Therefore, the area of the incident surface **502** is larger than that of the incident surface of light guiding plate **102** shown in Fig.1.

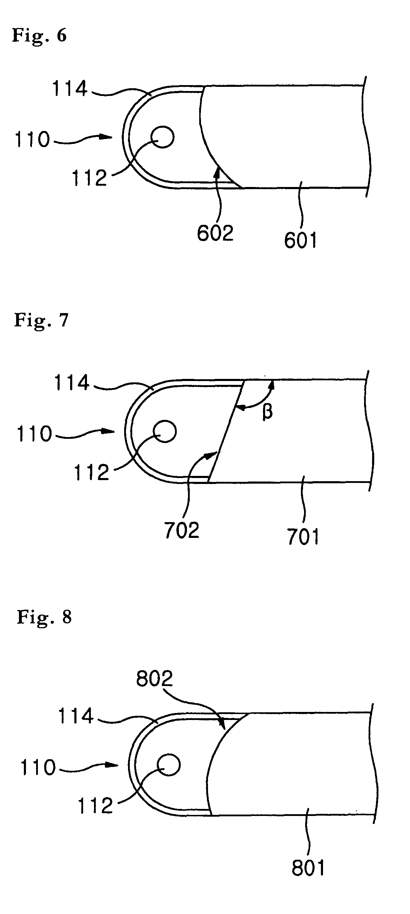

Fig.6 is a cross-sectional view partially showing the light source and the light guiding plate, disposed in BLU according to the fifth embodiment of the present invention.

An incident surface **602** of a light guide plate **601** shown in Fig. 6 is inclined as in the fourth embodiment, and the surface of the incident surface **602** is curved.

Fig.7 is a cross-sectional view partially showing the light source and the light guiding plate, disposed in BLU according to the sixth embodiment of the present invention.

An incident surface **702** of a light guiding plate **701** of BLU according to the sixth embodiment is not perpendicular to an upper surface of the light guiding plate **701,** but is inclined to a light source **112.**

In the light guiding plate **701** shown in Fig. 7, the angle (β) between the incident surface **702** and the upper surface is larger than 90°. Therefore, the area of the incident surface **702** is larger than that of the incident surface of light guiding plate **102** shown in Fig.1.

Fig.8 is a cross-sectional view partially showing the light source and the light guiding plate, disposed in BLU according to the seventh embodiment of the present invention.

An incident surface **802** of a light guide plate **801** shown in Fig. 8 is inclined as in the sixth embodiment, and the surface of the incident surface **802** is curved.

From the preferred embodiment for the present invention, it is noted that modifications and variations can be made by a person skilled in the art in light of the above teachings. Therefore, it should be understood that changes may be made for a particular embodiment of the present invention within the scope and the spirit of the present invention outlined by the appended claims.

## Claims

1. A back light unit comprising:
a light source unit;
a light guiding plate for changing and emitting the light incident from the light source unit into surface light, and having a means for preventing light loss on an incident surface facing the light source unit; and
a prism sheet located on the upper surface of the light guiding plate, each prism facing the light guiding plate.

2. The back light unit of claim 1, wherein the means for preventing light loss is protuberantly formed on the incident surface toward the light source unit.

3. The back light unit of claim 1, wherein the means for preventing light loss has prisms formed on the incident surface.

4. The back light unit of claim 1, wherein the means for preventing light loss is a fresnel lens attached onto the incident surface.

5. The back light unit of claim 1, wherein the means for preventing light loss has an oblique surface.

6. The back light unit of claim 5, wherein the oblique surface is curved.

7. The back light unit of claim 1, further including:
a reflective sheet located on the lower surface of the light guiding plate to reflect the light emitted from the light guiding plate.
